# EUROPÄISCHE PATENTSCHRIFT

(11) **EP 4 128 517 B1**
(45) Veröffentlichungstag und Bekanntmachung des Hinweises auf die Patenterteilung: **15.04.2026**
(21) Anmeldenummer: 21710406.6
(22) Anmeldetag: 16.02.2021
(51) Int. Cl.: H02K 16/02, F04C 18/16, F04C 25/02, H02K 49/10, F01C 17/00, F04C 23/02, F04C 29/00, H02K 7/14, F04C 18/08

(54) **ELEKTROMOTOR UND VAKUUMPUMPE**
ELECTRICAL MOTOR AND VACUUM PUMP
MOTEUR ÉLECTRIQUE ET POMPE À VIDE

(30) Priorität: 31.03.2020 DE 102020108924; 22.07.2020 DE 102020119335
(43) Veröffentlichungstag der Anmeldung: 08.02.2023
(73) Patentinhaber: VACUUBRAND GMBH + CO KG, 97877 Wertheim (DE)
(72) Erfinder: MÜLLER, Tobias, 97877 Wertheim (DE); FEHN, Christian, 97922 Unterbalbach (DE); GITMANS, Frank, 97877 Wertheim (DE)
(74) Vertreter: Hoffmann, Oliver
(86) Internationale Anmeldenummer: PCT/EP2021/053728
(87) Internationale Veröffentlichungsnummer: WO 2021/197704

(56) Entgegenhaltungen:
- EP-A1- 2 615 307
- EP-A1- 2 642 127
- WO-A1-2004/031585
- CN-A- 106 089 708
- JP-A- S5 146 418

## Beschreibung

Die Erfindung betrifft einen Elektromotor mit den Merkmalen gemäß dem Oberbegriff des Anspruchs 1. Die Erfindung betrifft ferner eine Vakuumpumpe nach dem Oberbegriff des Anspruchs 13.

Eine in der Industrie häufig eingesetzte Ausführungsform eines Elektromotors ist die eines Mehrfachwellenelektromotors, der zum synchronisierten Antrieb einer Mehrzahl von Wellen dient. Eine typische Anwendung, insbesondere für Elektromotoren mit zwei Wellen, sind Pumpen, bei denen zwei gegeneinander rotierende Verdrängerelemente die Förderleistung der Pumpe bewirken. Hierzu zählen insbesondere Schraubenpumpen, Roots- oder Wälzkolbenpumpen sowie Schraubenkompressoren. Bei den vorgenannten Pumpen laufen die Wellen jeweils gegenläufig. Die Verdrängerelemente, beispielsweise Schraubenspindeln, greifen bei der Rotationsbewegung möglichst dichtend ineinander. Sie dürfen sich hierbei jedoch nicht tatsächlich berühren, da dies negative Auswirkungen während des Betriebs in Form einer Erhöhung des Verschleißes, der Geräuschentwicklung und der Leistungsaufnahme bewirken würde. Insbesondere angesichts der häufig hohen Drehzahl solcher Pumpen ist daher eine exakte Fertigung sowie eine genaue Auswuchtung und Ausrichtung der beweglichen Bauteile wichtig. Aufgrund der erforderlichen Dichtigkeit sind die Spaltbreiten im Bereich der Verdrängerelemente äußerst gering bemessen. Von daher sind nur geringe Fertigungstoleranzen vorgesehen und es bestehen hohe Anforderungen an die Synchronität der Rotationsbewegung beider Wellen.

Zur Synchronisierung beider Wellen sind aus dem Stand der Technik bereits verschiedene Ansätze bekannt. Beispielsweise können die Wellen mechanisch, etwa mittels eines Zahnradgetriebes, gekoppelt werden. In diesem Fall ist häufig der Antrieb von nur einer Welle ausreichend, wobei die weiteren Wellen über das Getriebe angetrieben werden. Nachteilig ist hierbei allerdings, dass durch den mechanischen Kontakt der Bauteile des Kopplungsgliedes die zuvor genannten Probleme, d. h. ein Anstieg von Verschleiß, Betriebslautstärke und Leistungsaufnahme, auftreten. Neben dem vergleichsweise großen Platzbedarf ist bei dieser Lösung häufig auch eine ausreichende Schmierung notwendig, die wiederum eine sichere und gleichzeitig haltbare Abdichtung zum Schöpfraum erforderlich macht. Durch den hohen konstruktiven Aufwand ist dieser Ansatz relativ kostenintensiv.

Eine Alternative besteht in einer rein elektronischen Regelung der Drehzahlen der Wellen sowie ihrer relativen Phase. Insbesondere im Hinblick auf hohe Drehzahlen ist hierbei jedoch eine sehr genaue Regelung mit geringen Latenzzeiten notwendig. Abgesehen von einer entsprechend leistungsstarken Regelungselektronik ist der konstruktive Aufwand hierbei durch die aufwendige sensorische Ausstattung jeweils für beide Wellen vergleichsweise hoch.

Die Nachteile der vorgenannten Lösungen werden zum Teil durch einen Ansatz aufgehoben, bei dem ein Motor zum Einsatz kommt, bei welchem beide Wellen in einem gemeinsamen Statorfeld angeordnet sind. Das Statorfeld wirkt hierbei gleichzeitig auf zwei Rotormagneteinrichtungen ein, die mit jeweils einer Welle verbunden sind. Somit erfahren beide Rotormagneteinrichtungen etwaige Schwankungen des Statorfeldes stets in gleicher Weise. Hierdurch werden entsprechende Gleichlaufschwankungen weitgehend vermieden.

Eine Kopplung der Rotationsbewegung der Wellen wird ferner durch eine benachbarte Anordnung der Rotormagneteinrichtungen bewirkt, die insofern ein magnetisches Getriebe bilden.

Zur Verstärkung der Kopplung bei einem solchen magnetischen Getriebe wird in der WO 2004/031585 A1 ein zusätzliches Paar von Rotormagneteinrichtungen auf den parallelen Wellen vorgeschlagen, die in entsprechender Weise miteinander wechselwirken.

Um eine automatische und möglichst exakte Ausrichtung der Rotormagneteinrichtungen zueinander in Ruhelage zu erreichen, wird ferner in der EP 2 642 127 A1 vorgeschlagen, die Rotormagnetvorrichtungen sich durch freie Rotation auf der Welle selbstständig nach ihren miteinander wechselwirkenden, komplementären Magnetfeldern zu orientieren, bevor sie fest mit der Welle verbunden werden.

Problematisch ist hierbei jedoch, dass auf jede Rotormagneteinrichtung jeweils zwei Magnetfelder - das Statorfeld und das Magnetfeld der jeweils anderen Rotormagneteinrichtung - grundsätzlich unabhängig voneinander einwirken. Da der Justiergenauigkeit in der Praxis Grenzen gesetzt sind, kann hierbei die Situation auftreten, dass im Hinblick auf die Ausrichtung der Wellen die Ruhelage relativ zu einem statischen Statorfeld nicht exakt mit der Ruhelage in Bezug auf die magnetische Wechselwirkung der Rotormagneteinrichtungen miteinander übereinstimmt. Die Feldstärke des Statorfeldes ist in der Regel höher als die Kopplungswirkung der Rotormagneteinrichtungen zueinander. Daher sind bei aktivem Statorfeld die beiden Wellen in dem zuvor beschriebenen Fall stets um einen gewissen Drehwinkel gegenüber ihrer zueinander relativen Ruhelage versetzt.

Entsprechend dem Fall einer gespannten Feder besteht dabei zwischen den Rotormagneteinrichtungen eine Verspannung in Form einer Kraft, die sich als relatives Drehmoment auf die Wellen überträgt. Dieses bleibt auch bei einem sich ändernden Statorfeld bestehen, d.h. wenn ein Antrieb der Welle stattfindet. Beim Betrieb der Pumpe kann in dieser Situation aus geringen Gleichlaufschwankungen eine überlagerte Drehschwingung erwachsen, die die synchrone Rotation der Wellen beeinträchtigt und somit zu erheblichen Störungen führen kann. Solche Drehschwingungen treten in problematischer Weise insbesondere bei vergleichsweise kleinen Anlagen mit relativ langen Wellen oder bei einseitig gelagerten Systemen auf. Ferner werden häufig Kunststoffe wie PEEK aufgrund ihrer chemischen Beständigkeit zur Herstellung von Pumpenbauteilen herangezogen. Gegenüber metallischen Werkstoffen besitzen Kunststoffe jedoch in der Regel eine geringere Dichte und eine höhere Elastizität, was die Ausbildung von Schwingungen im Material begünstigt.

Da sich bei einem gemeinsamen Statorfeld die Rotation der Wellen nicht einzeln elektronisch regeln lässt, muss auf alternative Möglichkeiten zurückgegriffen werden, um der störende Drehschwingung entgegenzuwirken. Beispielsweise lässt sich die Amplitude dieser Drehschwingung durch ein im Normalfall berührungslos mitlaufendes, mechanisches Notlaufgetriebe begrenzen. Eine relative Rotation der Wellen wird hierbei etwa durch die Berührung von ineinandergreifenden Zahnrädern aufgehalten. Dies führt jedoch zum einen zu einer erheblichen Geräuschentwicklung und zum anderen aufgrund des Verschleißens der Zahnräder nach kurzer Zeit zu einem gesteigerten Wartungsaufwand.

Eine Dämpfung der Drehschwingung durch Verschiebung der Resonanzfrequenz würde ferner insbesondere eine Anpassung der Masse beteiligter Bauteile erfordern. Dieser Ansatz greift jedoch nicht für alle Drehzahlen gleichermaßen. Zudem geht mit einer zu leichten Bauweise eine strukturelle Instabilität einher, während eine zu massive Bauweise zu einer unerwünschten Steigerung des Energiebedarfs führt.

Vor diesem Hintergrund liegt der vorliegenden Erfindung die Aufgabe zugrunde, einen Elektromotor mit zwei Wellen bereitzustellen, bei dem die Rotation der Wellen besonders zuverlässig synchronisiert ist und bei dem insbesondere die zuvor beschriebenen Probleme vermieden werden.

Die vorgenannte Aufgabe wird durch einen Elektromotor mit den Merkmalen gemäß Anspruch 1 sowie durch eine Vakuumpumpe mit den Merkmalen gemäß Anspruch 13 gelöst.

Durch wenigstens eine Justiermagneteinrichtung auf jeder der zwei Wellen des erfindungsgemäßen Elektromotors lässt sich die zuvor beschriebene magnetische Verspannung in Form einer zwischen den Rotormagneteinrichtungen beider Wellen wirkenden Kraft ausgleichen. Hierzu wird durch die magnetische Wechselwirkung der Justiermagneteinrichtung einer Welle mit einer komplementären Justiereinrichtung der jeweils anderen Welle ein Gegendrehmoment zwischen den beiden Wellen erzeugt. Das Gegendrehmoment wirkt hierbei vorzugsweise als Korrektiv in dem Sinne, dass zwischen den Rotormagneteinrichtungen bei aktivem Statorfeld zumindest im Wesentlichen keine Kraft wirkt, die auf einer Drehwinkelverschiebung zueinander gegenüber der relativen Ruhelage beruht.

Die Justiermagneteinrichtung weist vorzugsweise einen ähnlichen Aufbau auf wie die Rotormagneteinrichtungen. Beispielsweise umfasst die Justiermagneteinrichtung wenigstens einen Magneten, dessen Magnetpole mit den Magnetpolen eines Magneten einer komplementären Justiermagneteinrichtung wechselwirken können. Die Anzahl, die Anordnung und/oder die Ausrichtung der Magneten kann jedoch individuell unterschiedlich sein. Als besonders geeignet hat sich insbesondere eine ringförmige, vorzugsweise äquidistante Anordnung von Magneten bzw. Magnetpolen um die Welle herum erwiesen.

In Bezug auf die relative Rotation entspricht das durch die Drehwinkelverschiebung hervorgerufene Drehmoment der Auslenkung gegen eine Federkraft bei einem schwingfähigen System. Ist das resultierende Drehmoment nahezu Null, neigt das vorliegende System selbst bei hohen Drehzahlen nicht dazu, eine überlagerte Drehschwingung zu entwickeln, die sich je nach Resonanzbedingungen bis in einen kritischen Bereich aufschaukeln kann. Wird die Amplitude einer solchen Drehschwingung zu groß, kann die magnetische Kopplung zwischen den Rotormagneteinrichtungen aus dem Takt geraten, so dass der Synchronlauf beider Wellen nicht mehr gewährleistet ist. Beispielsweise im Fall einer Pumpe kann es dann zu einer Kollision von rotierenden Verdrängerelementen kommen, was neben einem erhöhten Verschleiß und einem Anstieg des Betriebsgeräusches in schwerwiegenden Fällen auch den Ausfall der Pumpe zur Folge haben kann.

Treten relative Gleichlaufschwankungen zwischen den Wellen während des Betriebs auf, so werden die Justiermagneteinrichtungen relativ zueinander rotiert. Hierdurch wird erfindungsgemäß ein Anstieg der korrigierend wirkenden Kraft zwischen den jeweils einander zugeordneten Magnetpolen der Justiermagneteinrichtungen bewirkt, die der Ausbildung einer Drehschwingung verschleißfrei entgegenwirkt.

Die Gruppe aller Bauteile, die beim Betrieb der Pumpe mit der Welle mitrotieren, wird im Zusammenhang mit der vorliegenden Erfindung zusammengefasst als "Rotor" bezeichnet. Dies umfasst neben der Welle als solcher auch insbesondere die der Welle zugeordneten Rotormagneteinrichtungen, Justiermagneteinrichtungen, etwaige Verdrängerelemente und/oder sonstige Bauteile, die derart mit der Welle oder anderen Teilen des Rotors verbunden sind, dass sie beim Betrieb des Elektromotors mitrotieren.

Das Maß, in welchem die beiden Rotoren in Bezug auf ihre gegenseitige magnetische Wechselwirkung gegeneinander verspannt, d. h. drehverschoben, sind, hängt im Wesentlichen von den unvermeidbaren Toleranzen bei der Fertigung der Bauteile sowie bei der Montage des Elektromotors ab. Dieses Maß kann von daher kaum präzise vorhergesagt werden. Aus diesem Grund ist wenigstens eine der Justiermagneteinrichtungen derart rotierbar auf der zugehörigen Welle befestigt, dass sie relativ zu dieser mittels Rotation verstellbar ist. Alternativ oder zusätzlich kann die Einstellbarkeit der Justiermagneteinrichtung dadurch ausgedrückt werden, dass sie in ihrer Rotationswinkellage relativ zu einer komplementären Justiermagneteinrichtung der jeweils anderen Welle veränderbar ist. Es kann somit eine konkrete Justierung der Korrekturlage der Justiermagneteinrichtungen einzelfallabhängig vorgenommen werden.

Wenngleich nicht zwingend notwendig ist, dass jeweils beide miteinander wechselwirkenden Justiermagneteinrichtungen eines komplementären Paars in der vorgenannten Weise verstellbar ausgebildet sind, ist dies jedoch bei einer bevorzugten Ausführungsform vorgesehen. Hierdurch lässt sich die Einstellung der korrekten Ausgleichsposition der Justiermagneteinrichtung(en) erleichtern. Ferner kann die Handhabung der Vorrichtung unterstützt werden, beispielsweise wenn aufgrund baulicher Gegebenheiten eine der Justiermagneteinrichtungen für einen Benutzer nur schwer erreichbar ist.

Wie im Fall der Rotormagneteinrichtungen wird vorzugsweise auch durch die gegenseitige Beeinflussung der Justiermagneteinrichtungen eine Kopplung der Rotoren nach dem Prinzip eines magnetischen Getriebes bewirkt. Neben ihrer ausgleichenden Wirkung, beispielsweise zur erwähnten Vermeidung von überlagerten Drehschwingungen, tragen die Justiermagneteinrichtungen auf diese Weise zusätzlich zu einer stabilen Synchronisierung der Rotoren bei.

Die Justiermagneteinrichtungen können vorliegend neben den tatsächlich magnetisch wechselwirkenden Bauteilen, d. h. einem oder mehreren Magneten, auch weitere Elemente umfassen, die beispielsweise der Befestigung an der Welle, dem Zusammenhalt der Magneten und/oder insbesondere der Einstellbarkeit in Form einer Rotation und/oder einer axialen Verschiebung dienen. Gleiches gilt für die Rotormagneteinrichtungen.

Die Rotoren des erfindungsgemäßen Elektromotors bzw. einer Pumpe mit dem erfindungsgemäßen Elektromotor können zusätzlich zu den Rotormagneteinrichtungen, die als Teil des Antriebs im Statorfeld angeordnet sind, und den Justiermagneteinrichtungen auch weitere Rotormagneteinrichtungen außerhalb des Stators aufweisen, die zur weiteren magnetischen Kopplung der Rotoren dienen. Erfindungsgemäß ist auch eine kombinierte Ausführung einer einstellbaren Justiermagneteinrichtung mit einer starren Rotormagneteinrichtung möglich. Ein durch Drehung relativ zur Welle einstellbarer Teil erfüllt dabei vorzugsweise die oben genannte Funktion der Justiermagneteinrichtung, d. h. insbesondere den statischen und/oder dynamischen Ausgleich eines ungewollten relativen Drehmoments der Rotoren zueinander, während ein starr mit der Welle verbundener Teil lediglich zur Verstärkung der relativen Kopplung der Rotoren dient.

Es versteht sich, dass pro Welle auch eine Mehrzahl von Justiermagneteinrichtungen vorgesehen sein kann. Die Justiermagneteinrichtungen einer Welle sind dabei insbesondere unterschiedlich ausgestaltet, beispielsweise indem sie eine unterschiedliche Anzahl von Magneten umfassen. Hierdurch lässt sich in einigen Anwendungsfällen eine präzisere Einstellung der ausgleichenden Kraft bzw. des ausgleichenden Drehmoments vornehmen.

Bevorzugt ist wenigstens eine der Justiermagneteinrichtungen jeder Welle außerhalb des Stators angeordnet. Hierdurch erfährt die Justiermagneteinrichtung keine Einwirkung einer zusätzlichen Kraft durch das Statorfeld. Die ausgleichende Funktion der Justiermagneteinrichtung kann somit unabhängig von den übrigen auf den Rotor wirkenden Kräften erfolgen.

In funktionaler Hinsicht ist zu unterscheiden zwischen einer Korrekturkraft, die zwischen den Justiermagneteinrichtungen wirkt, und einer Koppelkraft, die zwischen zwei komplementären Rotormagneteinrichtungen wirkt. Dieser Unterscheidung steht nicht entgegen, dass auch durch die Wechselwirkung komplementärer Justiermagneteinrichtungen eine Kopplung erfolgt. Die Korrekturkraft resultiert insbesondere aus der gezielten Einstellung eines relativen Rotationswinkels zwischen den Justiermagneteinrichtungen. Bei der Rotation des Rotors während des Betriebs verhält sich die Korrekturkraft zwischen zwei Justiermagneteinrichtungen vorzugsweise phasenversetzt gegenüber der Koppelkraft zwischen zwei Rotormagneteinrichtungen. Eine Verspannung hinsichtlich der Koppelkraft kann beispielsweise zu einer Beschleunigung der Rotationsbewegung des Rotors führen, die durch die phasenversetzt wirkende Korrekturkraft gebremst wird.

Die Koppelkraft dient nominell lediglich zur Synchronisation der Rotoren. Der Korrekturkraft kommt somit vorliegend insbesondere die Funktion eines Ausgleichs von Fehlern in der Höhe, Ausrichtung und/oder Phase der Koppelkraft zu. Diese Fehler können sowohl statischer als auch dynamischer Natur sein. Im letzteren Fall wird durch den Ausgleich etwa die oben erläuterte Ausbildung einer überlagerten Drehschwingung verhindert.

Bei einer bevorzugten Ausführungsform ist die Korrekturkraft zwischen den komplementären Justiermagneteinrichtungen betragsmäßig größer oder gleich einer zwischen zwei komplementären Rotormagneteinrichtungen wirkenden Koppelkraft. Auf diese Weise kann sich die ausgleichende Korrekturkraft in besonders effektiver Weise auswirken. Insbesondere im Fall, dass die maximal erreichbare Korrekturkraft deutlich größer als die Koppelkraft ist, werden relative Gleichlaufschwankungen sowie auftretende überlagerte Drehschwingungen rasch gedämpft, vorzugsweise bevor sich eine Drehschwingung in nennenswertem Maß aufschaukelt bzw. die relative Drehverschiebung der Rotoren zueinander ein kritisches Maß erreicht.

Eine Rotormagneteinrichtung und/oder eine Justiermagneteinrichtung des erfindungsgemäßen Elektromotors weist in der einfachsten Ausführungsform lediglich einen Magneten auf. Besonders bevorzugt ist jedoch eine Ausführungsform mit einer Mehrzahl von Magneten, um eine zuverlässige Kopplung der Rotoren im Fall der Rotormagneteinrichtungen und ferner eine genauere Justage im Fall der Justiermagneteinrichtungen zu gewährleisten. Der oder die Magneten können als Ganzes und/oder aus Einzelteilen aufgebaut im Sinne einer mehrteiligen Ausführungsform in die Rotormagneteinrichtung bzw. Justiermagneteinrichtung eingebaut bzw. an dieser angebracht, insbesondere verklebt, sein. Die Herstellung der entsprechenden Bauteile ist somit auf einfache und kostengünstige Weise möglich. Vorzugsweise kommen gesinterte und/oder kunststoffgebundene Magneten zum Einsatz.

Wenigstens eine der Rotormagneteinrichtungen und/oder wenigstens eine der Justiermagneteinrichtungen umfasst vorzugsweise einen magnetischen Multipol. Da jeder Magnet selbst bereits einen Dipol darstellt, bezieht sich der Begriff eines magnetischen Multipols vorliegend auf Ausgestaltungen, die mindestens einen magnetischen Quadrupol umfassen, d. h. Ausführungsformen, bei denen wenigstens vier magnetische Pole vorgesehen sind. Besonders bevorzugt kommt jedoch ein magnetischer Multipol höherer Ordnung, vorzugsweise ein wenigstens achtfacher Multipol, weiter bevorzugt ein wenigstens 12-facher Multipol, besonders bevorzugt ein wenigstens 24-facher Multipol, zum Einsatz. Erfindungsgemäß ist die Anzahl der magnetischen Pole jedoch nicht nach oben begrenzt. Grundsätzlich kann also ein n-facher Multipol im Sinne eines Multipols beliebiger Ordnung zum Einsatz kommen. Abhängig von der Anzahl der Pole einer Rotormagneteinrichtung bzw. Justiermagneteinrichtung lässt sich eine entsprechend präzisere Kopplung der Rotoren bzw. eine feinere Einstellung der Justiermagneteinrichtung zum Ausgleich der oben beschriebenen Verspannung erzielen.

Es versteht sich, dass Rotormagneteinrichtungen und/oder Justiermagneteinrichtungen bei dem erfindungsgemäßen Elektromotor nicht stets dieselbe Anzahl von Magneten bzw. Magnetpolen aufweisen müssen. Jeweils komplementär einander zugeordnete Rotormagneteinrichtungen bzw. Justiermagneteinrichtungen entsprechen sich jedoch vorzugsweise in der Anzahl ihrer Magneten bzw. Magnetpole und/oder ihrer sonstigen Ausgestaltung. Insbesondere ist eine zumindest im Wesentlichen gleiche bzw. symmetrische Ausgestaltung der komplementär einander zugeordneten Rotor- bzw. Justiermagneteinrichtungen eines Paares bevorzugt.

Im Hinblick auf einen geringen konstruktiven Aufwand sind insbesondere Permanentmagneten für den Einsatz in einer Rotormagneteinrichtung und/oder einer Justiermagneteinrichtung geeignet. Neben kostengünstigen Eisenmagneten sind insbesondere neodymhaltige Magneten bevorzugt, die sich durch eine hohe Remanenz auszeichnen und sich daher insbesondere für kleinbauende Ausführungsformen der Rotor- bzw. Justiermagneteinrichtungen eignen. Alternativ oder zusätzlich zu Permanentmagneten kann eine Justiermagneteinrichtung auch einen Elektromagneten aufweisen. Hierdurch lässt sich nicht nur die relative Lage der Justiermagneteinrichtung zu einer komplementären Justiermagneteinrichtung des jeweils anderen Rotors einstellen, sondern auch die Feldstärke und somit die Korrekturkraft einstellen.

Ferner erlaubt die Ausgestaltung als Elektromagnet ein bedarfsweises Ein- und Ausschalten der Justiermagneteinrichtung, sofern dies nötig sein sollte. Beispielsweise kann somit im Zusammenhang mit einer elektronischen Regelung des Elektromotors, insbesondere in Bezug auf die Drehzahl, durch ein Zuschalten der elektromagnetischen Wirkung der Justiermagneteinrichtung korrigierend eingegriffen werden, wenn Gleichlaufschwankungen oder Asynchronitäten festgestellt werden. Insbesondere das Auftreten einer überlagerten Drehschwingung kann somit frühzeitig unterdrückt werden, vorzugsweise bevor die Schwingungsamplitude ein kritisches Maß erreicht, wodurch der ordnungsgemäße Betrieb gestört würde.

Im Hinblick auf die Rotationsbewegung weist wenigstens eine der Justiermagneteinrichtungen einen zylinderförmigen Grundkörper auf. Hierbei verläuft die Längsachse des Zylinders insbesondere parallel zur Rotationsachse der Welle des Rotors und fällt vorzugsweise mit dieser zusammen. Die Magnetpole der Justiermagneteinrichtung können hierbei vorzugsweise äquidistant umlaufend auf dem Zylindermantel angeordnet sein.

Alternativ oder zusätzlich kann wenigstens eine der Justiermagneteinrichtungen auch insbesondere dadurch von einer reinen Zylinderform abweichen, dass die Justiermagneteinrichtung ein radial abragendes, vorzugsweise ringförmiges, Element oder mehrere solcher Elemente, insbesondere axial voneinander beabstandet, aufweist. Grundsätzlich können somit Magneten bzw. die Position der Magnetpole radial weiter nach außen verlagert werden, so dass der Abstand zwischen Justiermagneteinrichtungen der beiden Rotoren verringert wird, ohne den Durchmesser der Justiermagneteinrichtung insgesamt, d.h. über die gesamte axiale Länge, zu vergrößern. Auf diese Weise wird das Trägheitsmoment der Justiereinrichtung trotz der Verlagerung der Magnetpole weiter nach außen vergleichsweise gering gehalten und das Risiko störender Unwuchten reduziert. Hierdurch wird im Ergebnis ein ruhigerer Lauf des Rotors und eine bessere Kontrollierbarkeit der Rotationsbewegung erreicht.

Eine besonders bevorzugte Ausgestaltung der Erfindung sieht vor, dass zwei komplementäre Justiermagneteinrichtungen jeweils wenigstens ein radial abragendes Element, insbesondere einen axialen Abschnitt, aufweisen, der zumindest teilweise so weit radial von der jeweiligen Welle abragt, dass sich die entsprechenden Bereiche der komplementären Justiereinrichtungen in axialer Projektion zumindest teilweise überlappen. Dies kann beispielsweise durch eine oder mehrere scheibenartige Strukturen einer Justiermagneteinrichtung realisiert sein, die jeweils in entsprechende Freiräume, vorzugsweise Ringnuten, der jeweils komplementären Justiermagneteinrichtung eingreifen. Sind die Magnetpole der Justiermagneteinrichtungen in den entsprechenden Bereichen, d.h. insbesondere in den scheibenartigen Strukturen, radial außenliegend angeordnet, ergibt sich hierdurch eine räumliche Verschränkung der Magnetpole der komplementären Justiermagneteinrichtungen miteinander. Die magnetische Wechselwirkung findet in diesem Fall nicht mehr nur über die einander gegenüberliegenden Tangentialflächen der Justiermagneteinrichtungen statt. Die verschränkte Anordnung erlaubt es vielmehr, die Magnetpole weiter in das Feld des jeweils zugeordneten Magnetpols der komplementären Justiermagneteinrichtung einzubringen. Hierdurch wird die magnetische Kopplung zwischen den Justiermagneteinrichtungen, d.h. insbesondere die maximal erreichbare Korrekturkraft, verstärkt. Im Fall mehrerer, insbesondere axial versetzter, radial abragender Elemente - beispielsweise in Form mehrerer parallel angeordneter scheibenartiger Strukturen - dringt ein Magnetpol einer Justiermagneteinrichtung vorzugsweise derart in den vorgesehenen Freiraum der komplementären Justiermagneteinrichtung ein, dass jeweils das Magnetfeld zweier oder mehr der an den Freiraum angrenzenden Magnetpole auf ihn einwirkt, wodurch die Kopplung weiter verstärkt wird.

Ein höherer Integrationsgrad kann dadurch erreicht werden, dass wenigstens eine der Justiermagneteinrichtungen in die zugehörige Welle zumindest im Wesentlichen integriert ist. Im Bereich der Justiermagneteinrichtung stehen in diesem Fall keine oder zumindest nur geringe Teile der Justiermagneteinrichtung über den mittleren Radius der Welle hinaus ab. Dies ist insbesondere bei einer nah benachbarten Anordnung der Wellen von Vorteil. Insbesondere in diesem Fall, jedoch auch unabhängig von diesem, ist auch eine entsprechende Integration wenigstens einer Rotormagneteinrichtung bevorzugt. Eine Integration sowohl einer Justiermagneteinrichtung als auch einer Rotormagneteinrichtung muss nicht an derselben Welle, sondern kann auch an unterschiedlichen Wellen vorgesehen sein.

Ein weiterer Ansatzpunkt, um den Ausgleich von Fehlern in der Kopplung der Rotoren über die Rotormagneteinrichtungen zu beeinflussen, kann dadurch geschaffen werden, dass wenigstens eine der Justiermagneteinrichtungen axial entlang der zugehörigen Welle verschiebbar ist. Hierdurch kann beispielsweise auf in axialer Richtung lokal auftretende Unwuchten oder eine zeitweilig und/oder periodisch auftretende Torsion des Rotors bzw. der Welle reagiert werden.

Alternativ oder zusätzlich kann auch wenigstens eine der im Stator angeordneten Rotormagneteinrichtungen axial verschieblich und/oder versetzt gegenüber der komplementären Rotormagneteinrichtung angeordnet sein.

Es ist erfindungsgemäß nicht zwingend notwendig, dass eine Justiermagneteinrichtung lediglich eine Magnetgruppe an einer bestimmten axialen Position aufweist, beispielsweise in Form eines Rings von um die Welle angeordneten Magneten bzw. Magnetpolen. Bei einer bevorzugten Ausführungsform kann vielmehr auch eine Mehrzahl von axial versetzt angeordneten Magneten und/oder Magnetgruppen, die einer Justiermagneteinrichtung zugeordnet sind, vorgesehen sein. Eine solche Justiermagneteinrichtung kann somit auch eine Mehrzahl von ringförmig angeordneten Magnetgruppen aufweisen, wobei die verschiedenen Magneten bzw. Magnetgruppen in axialer Richtung sowohl unmittelbar aneinander angrenzend als auch voneinander beabstandet angeordnet sein können. Darüber hinaus können verschiedene Magnetgruppen einer Justiermagneteinrichtung auch unterschiedlich viele Magnetpole aufweisen. Die Magnetgruppen sind ferner vorzugsweise unabhängig voneinander durch Einstellung ihrer Rotationswinkellage relativ zur komplementären Justiermagneteinrichtung der anderen Welle einstellbar.

Ein gleichmäßiger Lauf der Rotoren wird durch eine kontinuierliche magnetische Wechselwirkung insbesondere zwischen zwei komplementären Justiermagneteinrichtungen erzielt. Hierzu sind bei einer Justiermagneteinrichtung mit axial zueinander versetzten Magneten diese relativ zueinander um die Wellenachse rotiert. Besonders bevorzugt ergibt sich hierbei eine Spiralform bzw. eine schraubenförmige Anordnung jeweils gleicher Magnetpole um die Wellenachse. Bei der Rotation der Rotoren treten in diesem Fall zunächst zwei Magnetpole der zueinander komplementären Justiermagneteinrichtungen in Wechselwirkung miteinander. Wird die Rotation fortgesetzt, entfernen sich diese Magnetpole wieder voneinander, während die axial benachbarten Magnetpole in stärkere Wechselwirkung miteinander treten. Durch die schraubenförmig um die Wellenachse herum verlaufende Anordnung der jeweils gleichen Magnetpole setzt sich diese Abfolge bei fortschreitender Rotation der Rotoren in axialer Richtung fort und beginnt nach einer vollständigen Rotation von neuem.

Eine rotatorische Einstellung der Justiermagneteinrichtung gegenüber der zugehörigen Welle um einen bestimmten Drehwinkel zum Ausgleich der eingangs beschriebenen störenden Effekte wirkt sich auch bei einer schraubenförmigen Anordnung gleichsam für alle Magnetpole aus. Allerdings wird auf diese Weise das periodische Auftreten von Spitzenwerten der zwischen den Justiermagneteinrichtungen wirkenden Korrekturkraft vermieden. Die Korrekturkraft wird maximal, wenn zwei komplementäre Magnetpole der Justiermagneteinrichtungen in Folge der Rotation den geringsten Abstand zueinander erreichen. Wird die Rotation fortgesetzt, sinkt die Korrekturkraft zunächst wieder bis das nächste Magnetpolpaar in Wechselwirkung miteinander gerät. Durch das periodische Einwirken der Kraftspitzen können ungewünschte Vibrationen hervorgerufen werden, die zu einem unruhigen Lauf der Rotoren führen. Eine nahezu kontinuierliche Verteilung der zwischen den Magnetpolen zweier komplementärer Justiermagneteinrichtungen wirkenden Korrekturkraft über einen Teil des Umfangs der Justiermagneteinrichtung, vorzugsweise über deren gesamten Umfang, kann den vorgenannten Effekt erheblich verringern.

Besonders bevorzugt ist eine schraubenförmige Anordnung der Magnetpole, bei der die Wechselwirkung der ersten Magnetpole an einem axialen Ende der Justiermagneteinrichtung sich möglichst nahtlos an die Wechselwirkung der letzten Magnetpole am anderen axialen Ende der Justiermagneteinrichtung anschließt. Hierzu führt die durch die Magnetpole beschriebene Schraubenlinie um den Rotor vorzugsweise einen vollständigen Umlauf oder eine ganzzahlige Anzahl von Umläufen aus. Das erste und das letzte Magnetpolpaar der Justiermagneteinrichtung verhalten sich in diesem Fall so als seien sie unmittelbar benachbart und würden die Schraubenlinie weiter fortsetzen. Es kommt somit bei der Rotation der Rotoren zu keiner wesentlichen Unterbrechung in der gegenseitigen Kopplung bzw. in dem Wirken der Korrekturkraft zwischen den Justiermagneteinrichtungen.

Eine oder mehrere der Justiermagneteinrichtungen können durch eine entsprechende Trageinrichtung mit der Welle verbunden sein. Hierzu ist die Trageinrichtung, bei der es sich insbesondere um eine vorzugsweise aus Aluminium gefertigte Hülse handelt, in geeigneter Weise auf der Welle angeordnet. Wird eine Justiereinrichtung zunächst auf einer Trageinrichtung erzeugt und dann mittels dieser auf die jeweilige Welle aufgeschoben oder anderweitig aufgebracht, erleichtert dies die Konstruktion des Rotors bzw. des Elektromotors insgesamt erheblich. Neben einer kostengünstigen Herstellung ist hiermit auch eine leichtere Wartung und Instandsetzung verbunden. Zu diesen Zwecken kann die Justiermagneteinrichtung mit geringem Aufwand von der Welle abgenommen und außerhalb des Elektromotors repariert oder ausgetauscht werden.

Eigene erfinderische Bedeutung kommt vorliegend auch einer Vakuumpumpe zu, die zum Antrieb einen erfindungsgemäßen Elektromotor aufweist. Bei der erfindungsgemäßen Vakuumpumpe handelt es sich insbesondere um eine Drehkolbenpumpe bzw. eine Wälzkolben- oder Rootspumpe oder um eine Schraubenpumpe. Allgemein weist die erfindungsgemäße Vakuumpumpe wenigstens zwei Verdrängerelemente auf, die von dem Elektromotor rotatorisch angetrieben werden. Hierbei ist die Pumpe jedoch nicht auf eine bestimmte Art von Verdrängerelementen festgelegt. Auch eine Kombination verschiedenartiger Verdrängerelemente beispielsweise in Form mehrerer nachgeordneter Pumpenstufen ist möglich.

Die erfindungsgemäße Vakuumpumpe ist insbesondere für mittlere und geringe Förderleistungen ausgelegt. Vorzugsweise weist sie ein Saugvermögen von unter 50 m³/h auf.

**In** einer besonderen Ausgestaltung weist wenigstens eines der Verdrängerelemente eine zusätzliche Rotormagneteinrichtung auf, so dass eine magnetische Kopplung der Rotoren auch im Schöpfraum besteht. Alternativ oder zusätzlich kann auch die Justiermagneteinrichtung der jeweiligen Welle oder eine zusätzliche Justiermagneteinrichtung am oder im Verdrängerelement der Welle vorgesehen sein. Hierdurch wird der Integrationsgrad und damit die Baugröße der Pumpe weiter verringert. Ferner setzt eine zusätzliche Kopplung und/oder Justiermöglichkeit zum Ausgleich von Drehwinkelfehlstellungen durch eine Anordnung im Bereich der Verdrängerelemente dort an, wo sich überlagerte Drehschwingungen oder sonstige Gleichlaufschwankungen bzw. Störungen des Synchronlaufs beider Rotoren am stärksten negativ auswirken.

Zur Erfassung der Rotationsposition bzw. der Rotationsgeschwindigkeit eines Rotors ist vorzugsweise eine entsprechende Erfassungseinrichtung vorgesehen. Insbesondere weist die Vakuumpumpe eine entsprechende Sensorschaltung auf, die mit einem komplementären Gebermagneten des Rotors in Wechselwirkung steht. Bei einer besonders bevorzugten Ausführungsform umfasst wenigstens eine der Justiermagneteinrichtungen eines Rotors einen Magneten, der die Funktion eines Gebermagneten in einer solchen Anordnung erfüllt.

Nachfolgend wird die Erfindung anhand von Ausführungsbeispielen im Einzelnen näher erläutert. Dabei bilden alle beschriebenen und/oder zeichnerisch dargestellten Merkmale jeweils eigenständige Aspekte der Erfindung, unabhängig von ihrer Kombination in den Ausführungsbeispielen oder den Rückbezügen der Ansprüche.

Es zeigt.
- Fig. 1: eine schematische Schnittdarstellung eines erfindungsgemäßen Elektromotors im Antriebsbereich,
- Fig. 2: eine der Fig. 1 entsprechende Darstellung des Elektromotors von Fig. 1 in einem alternativen Betriebszustand,
- Fig. 3: ein schematischer Längsschnitt des erfindungsgemäßen Elektromotors,
- Fig. 4A: eine Querschnittsdarstellung zweier Rotormagneteinrichtungen,
- Fig. 4B: eine Querschnittsdarstellung zweier Justiermagneteinrichtungen,
- Fig. 5: eine schematische Darstellung zweier Rotoren einer erfindungsgemäßen Vakuumpumpe in Draufsicht,
- Fig. 6: ein schematischer Längsschnitt einer erfindungsgemäßen Vakuumpumpe und
- Fig. 7: ein schematischer Längsschnitt einer bevorzugten Ausführungsform zweier Justiermagneteinrichtungen.

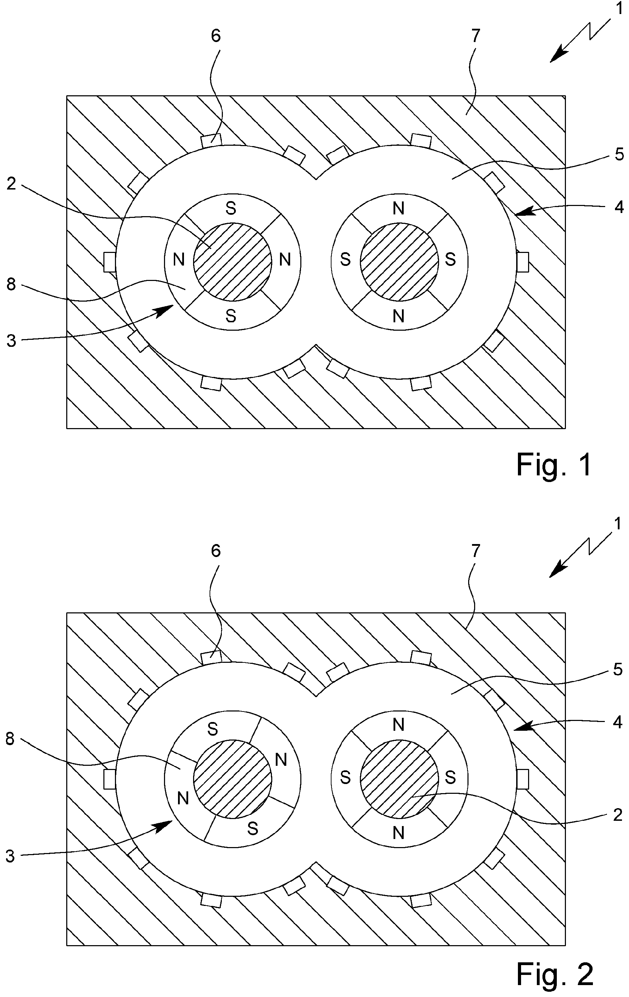

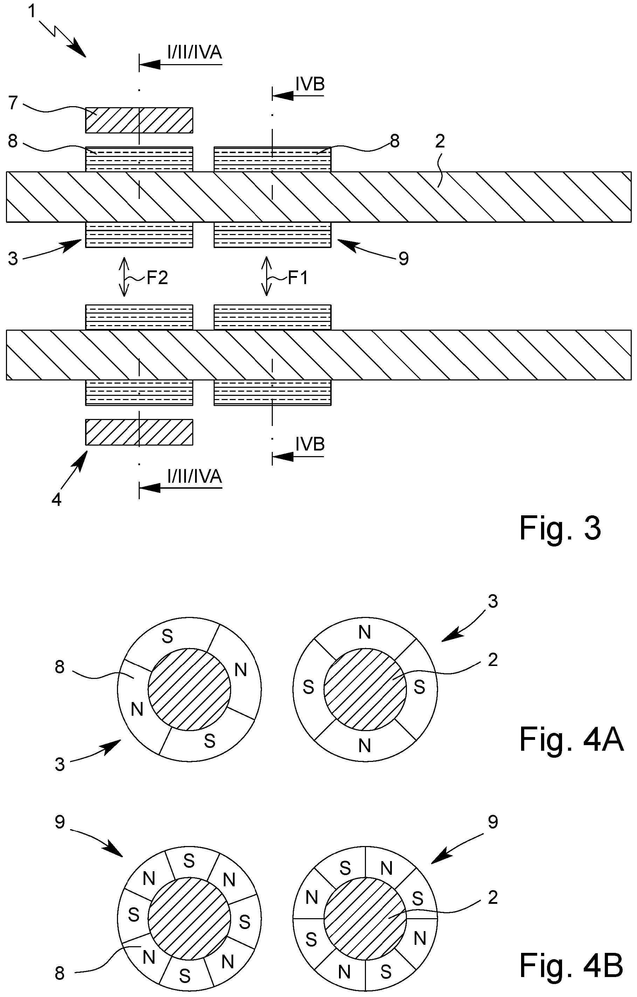

In Fig. 1 ist ein erfindungsgemäßer Elektromotor 1 mit zwei Wellen 2 in einer Querschnittsdarstellung wiedergegeben. Die Schnittebene verläuft in der vorliegenden Darstellung senkrecht zur Längs- bzw. Rotationsachse der Wellen 2 im Bereich des eigentlichen Elektromotorantriebs, wie in Fig. 3 durch eine strichpunktierte Linie I/II/IVA angedeutet. Der Elektromotor 1 ist vorzugsweise als Zwei-Wellen-Synchronmotor ausgebildet.

Die Wellen 2 verlaufen insbesondere parallel und tragen jeweils eine Rotormagneteinrichtung 3, die mit der Welle 2 drehfest verbunden ist. Die Rotormagneteinrichtungen 3 beider Wellen dienen beim Betrieb des Elektromotors 1 zum Antrieb insbesondere gegenläufiger Rotationsbewegungen der Wellen 2. Sie sind vorliegend in einem gemeinsamen Stator 4 angeordnet, wie in Fig. 1 und 2 gezeigt. Der Stator 4 ist dazu ausgebildet, ein magnetisches Feld zu erzeugen, das mit den Rotormagneteinrichtungen 3 wechselwirkt und diese bei einer entsprechenden periodischen Änderung des Statorfeldes im Sinne eines Antriebs in Rotation versetzt.

Im Betriebszustand des Elektromotors 1 erfahren somit beide Rotormagneteinrichtungen 3 gleichsam die Wirkung des vom Stator 4 erzeugten Magnetfeldes. Dies bedeutet freilich nicht, dass die Form des Magnetfeldes und/oder die Feldstärke an den Orten beider Rotormagneteinrichtungen 3 identisch sein muss. Vielmehr kann dies anwendungsbedingt je nach Bauart unterschiedlich ausgestaltet sein. Dennoch erfahren beide Rotormagneteinrichtungen 3 beim Einschalten des Stators 4, d. h. insbesondere wenn dieser elektrisch bestromt wird, das erzeugte Feld gleichzeitig und synchron in Bezug auf alle Veränderungen oder Schwankungen des Feldes. Hierdurch wird gewährleistet, dass diesbezüglich keine Gleichlaufschwankungen oder Drehzahlunterschiede der beiden Wellen 2 zu erwarten sind.

Der Stator 4 weist einen Statorinnenraum 5 auf, in dem die Rotormagneteinrichtungen 3 angeordnet sind. Im Statorinnenraum 5 wird das Magnetfeld des Stators 4 mittels eines Felderzeugers 6, vorzugsweise mittels einer Mehrzahl von Felderzeugern 6, erzeugt. Bei den Felderzeugern 6 handelt es sich insbesondere um Spulen, die ein Magnetfeld erzeugen, wenn sie von elektrischem Strom durchflossen werden. Durch die Anzahl und Anordnung der Felderzeuger 6 kann die Form und lokale Feldstärke des Magnetfeldes im Statorinnenraum 5 beeinflusst werden.

Der Statorinnenraum 5 ist insbesondere in einem Gehäuse 7 ausgebildet. Hierbei kann das Gehäuse 7 bis an den Statorinnenraum 5 heranreichen. Möglich ist darüber hinaus jedoch auch eine Ausführungsform, bei der das Gehäuse 7 nur eine äußere Umhüllung der beweglichen und elektrisch leitenden Komponenten darstellt und insofern dem Schutz eines Benutzers dient. Der Statorinnenraum 5 wird letztlich durch die Anordnung der Felderzeuger 6 gebildet und in seiner Form maßgeblich beeinflusst. In funktionaler Hinsicht ist der Statorinnenraum 5 der von den Felderzeugern 6 umgebene Bereich, in dem das magnetische Feld zum Antrieb der Rotormagneteinrichtungen 3 erzeugt wird. Ein hieran möglichst exakt angepasster Ausschnitt des Gehäuses 7, wie in den Fig. 1 und 2 dargestellt, kann allerdings in Bezug auf eine thermische und/oder elektromagnetische Abschirmung oder hinsichtlich der Geräuschdämmung vorteilhaft sein.

Beim Betrieb des Elektromotors 1 werden die Rotormagneteinrichtungen 3 durch ein sich veränderndes magnetisches Feld des Stators 4 in Rotation versetzt. Wie zuvor beschrieben, wird das Feld des Stators 4 insbesondere von Felderzeugern 6 erzeugt. Werden Spulen, die als Felderzeuger 6 eingesetzt werden, in konstanter Weise von einem unveränderlichen Gleichstrom durchflossen, so entsteht im Statorinnenraum 5 ein statisches Magnetfeld, nach welchem sich die Rotormagneteinrichtungen 3 bzgl. ihrer Rotationslage ausrichten.

Die Rotormagneteinrichtungen 3 umfassen hierzu wenigstens einen Magneten zur Wechselwirkung mit dem Feld des Stators 4. Dementsprechend weisen die Rotormagneteinrichtungen 3 jeweils wenigstens zwei Magnetpole 8 - einen magnetischen Nordpol N und einen magnetischen Südpol S - auf. Liegt nun ein äußeres Feld ausreichender Stärke im Bereich der Rotormagneteinrichtung 3 an, so richten sich die Magnetpole 8 entsprechend diesem Feld aus, wodurch eine Rotation der Rotormagneteinrichtung 3 zusammen mit der Welle 2 bewirkt wird. Durch eine periodische Veränderung des äußeren Feldes erfolgt jeweils eine weitere Ausrichtung der Magnetpole 8, so dass die Rotationsbewegung fortgesetzt wird und kontinuierlich aufrechterhalten werden kann.

Bei Abwesenheit eines äußeren Feldes, insbesondere des Statorfeldes, wird die Wechselwirkung der Magnetpole 8 der beiden benachbart angeordneten Rotormagneteinrichtungen 3 deutlich. Die Rotormagneteinrichtungen 3 richten sich bzgl. ihrer Rotationswinkellage so aus, dass zwei unterschiedliche Magnetpole 8 der beiden Rotormagneteinrichtungen 3 einander zugewandt und möglichst nah beabstandet sind, entsprechend der Darstellung von Fig. 1. Aus dieser Wechselwirkung resultiert eine Kopplungswirkung zwischen den Rotormagneteinrichtungen 3 im Sinne eines magnetischen Getriebes.

In Gegenwart des vom Stator 4 erzeugten magnetischen Feldes treten beide der vorgenannten Wechselwirkungen d. h. die Reaktion der Magneten bzw. Magnetpole 8 auf das äußere Feld und die gegenseitige Kopplung der Magnetpole 8 der komplementären Rotormagneteinrichtungen 3 untereinander, gemeinsam in konkurrierender Weise auf. Im Hinblick auf einen störungsfreien Betrieb wird bei der Fertigung des Elektromotors 1 grundsätzlich versucht, dass sich die Ausrichtung der Rotormagneteinrichtungen 3 nach dem Feld des Stators 4 und nach dem Feld der Magnetpole 8 der jeweils komplementären Rotormagneteinrichtung 3 nach Möglichkeit entsprechen. In diesem Fall ist auch bei aktiviertem (statischen) Statorfeld eine Ausrichtung der Rotormagneteinrichtungen 3 gemäß Fig. 1 zu erwarten.

Aufgrund von Fertigungstoleranzen und einer in der Praxis begrenzten Montagegenauigkeit tritt jedoch häufig der in Fig. 2 gezeigte Fall auf, wenn vom Stator 4 ein konstantes Magnetfeld erzeugt wird, indem er beispielsweise mit einem zeitlich unveränderlichen Gleichstrom bestromt wird. Da das vom Stator 4 erzeugte äußere Feld in der Regel betragsmäßig größer ist als die Kopplung zwischen den Magnetpolen 8 der Rotormagneteinrichtungen 3, richten sich diese hierbei vornehmlich nach dem äußeren Feld aus. Weichen die jeweiligen Ruhelagen der Rotormagneteinrichtungen 3 einerseits in Bezug auf das äußere Feld und andererseits bezogen auf das Feld der anderen Rotormagneteinrichtung 3 fertigungsbedingt voneinander ab, tritt der in Fig. 2 gezeigte Fall auf. Hierbei nehmen die Rotormagneteinrichtungen 3 eine Stellung ein, die weitgehend der Ruhelage in Bezug auf das stärkere Magnetfeld des Stators 4 entspricht. Diese Stellung stellt jedoch eine Auslenkung aus der Ruhelage bezüglich der gegenseitigen magnetischen Wechselwirkung der Rotormagneteinrichtungen 3 dar. Dieses Missverhältnis setzt sich auch bei der Rotation der Rotormagneteinrichtungen 3 in einem sich dynamisch ändernden Statorfeld fort, wenn die Felderzeuger 6 in sich insbesondere periodisch verändernder Weise bestromt werden.

Aus der zuvor beschriebenen Auslenkung der Rotormagneteinrichtungen 3 gegenüber der Ruhelage bezüglich ihrer gegenseitigen Kopplung ergibt sich eine Verspannung in Form einer resultierenden relativen Kraft, entsprechend der Federspannung bei einer ausgelenkten mechanischen Feder. Diese Kraft erzeugt ein relatives Drehmoment zwischen den Rotormagneteinrichtungen 3 bzw. den Wellen 2. Dies kann insbesondere bei großen Drehzahlen des Elektromotors 1 insofern problematisch werden, dass durch die Verspannung der Rotormagneteinrichtungen 3 gegeneinander ein schwingfähiges System gebildet wird. Während des Betriebs des Elektromotors 1 kann hierdurch eine überlagerte Drehschwingung der Rotormagneteinrichtungen 3 bzw. der Wellen 2 relativ zueinander auftreten. Mit wachsender Amplitude dieser überlagerten Drehschwingung gerät die Kopplung der Rotormagneteinrichtungen 3 und damit die Synchronität der Rotationsbewegung beider Wellen 2 mehr und mehr aus dem gewünschten Bereich. Dies ist insbesondere dann kritisch, wenn das schwingfähige System bzw. die überlagerte Drehschwingung bei einer bestimmten Drehzahl in Resonanz gerät. Durch das Aufschaukeln der Schwingungsamplitude kann in einem solchen Fall eine Kollision von durch den Elektromotor 1 angetriebenen Bauteilen oder gar deren Zerstörung auftreten.

Hier setzt die Erfindung an, indem auf jeder der zwei Wellen 2 wenigstens eine Justiermagneteinrichtung 9 angeordnet ist. Jeweils zwei Justiermagneteinrichtungen 9 bilden vorzugsweise ein komplementär zusammenwirkendes Paar.

Die Justiermagneteinrichtungen 9 sind vorliegend zusätzlich zu den Rotormagneteinrichtungen 3 auf der Welle 2 angeordnet, wie es in Fig. 3 beispielhaft dargestellt ist. Wenigstens eine der Justiermagneteinrichtungen 9 ist dabei insbesondere außerhalb des Stators 4 angeordnet. In der Darstellung von Fig. 3 wird dies durch eine Begrenzung des Gehäuses 7 in axialer Richtung auf den Bereich der Rotormagneteinrichtungen 3 optisch verdeutlicht. Es versteht sich, dass das Gehäuse 7 jedoch auch die Justiermagneteinrichtungen 9 sowie weitere Teile des Elektromotors 1 umschließen kann.

Die Wirkung der Justiermagneteinrichtungen 9 beruht darauf, dass wenigstens eine der Justiermagneteinrichtungen 9 mittels Rotation relativ zu der zugehörigen Welle 2 verstellbar ist bzw. in der Rotationswinkellage relativ zur jeweils komplementären Justiermagneteinrichtung 9 der jeweils anderen Welle 2 veränderbar ist. Hierzu ist die Justiermagneteinrichtung 9 derart auf der Welle 2 befestigt, dass sie zwar bei einer Rotation der Welle 2 mitgedreht wird, jedoch in ihrer Rotationswinkellage gegenüber der Welle 2 und damit gegenüber der komplementären Justiermagneteinrichtung 9 der anderen Welle 2 verändert und in dieser veränderten Lage fixiert werden kann.

Die Darstellungen der Fig. 4A und 4B verdeutlichen die relativen Ausrichtungen der Rotormagneteinrichtungen 3 und der Justiermagneteinrichtungen 9 zueinander. Hierbei entspricht Fig. 4A dem Schnitt durch die Rotormagneteinrichtungen 3 entsprechend der in Fig. 2 gezeigten Situation, jedoch ohne die umliegenden Einrichtungen des Stators 4 sowie des Gehäuses 7. Es ist erkennbar, dass die einander am nächsten zugewandten Magnetpole 8 der beiden Rotormagneteinrichtungen 3 sich nicht in einer Position befinden, die der Ruhelage aufgrund ihrer gegenseitigen Anziehung entspricht. In dieser Ruhelage wäre der magnetische Nordpol N der vorliegend links angeordneten Rotormagneteinrichtung 3, welcher der vorliegend rechts angeordneten Rotormagneteinrichtung 3 am nächsten liegt, als Bezugsmagnet bzw. Bezugsmagnetpol derart ausgerichtet, dass sein Mittelpunkt den nächstliegenden Punkt zur rechten Rotormagneteinrichtung 3 darstellt. Der erwähnte Mittelpunkt des magnetischen Nordpols N ist im vorliegenden Beispiel geometrisch auf die Umfangsrichtung bezogen. Funktional handelt es sich hierbei insbesondere um den Punkt, an dem die magnetischen Feldlinien senkrecht und/oder mit der höchsten Dichte austreten. Gleiches gilt in entsprechender Weise für den magnetischen Südpol S der anderen Rotormagneteinrichtung 3. Die Ruhelage entspräche letztlich der in Fig. 1 gezeigten Ausrichtung der Rotormagneteinrichtungen 3.

Der in Fig. 4A gezeigte Fall einer Verspannung der Rotormagneteinrichtungen 3 gegeneinander, einschließlich seiner oben beschriebenen negativen Konsequenzen, kann durch die erfindungsgemäß vorgesehenen Justiermagneteinrichtungen 9 kompensiert oder zumindest auf ein akzeptables Maß verringert werden. Ein Schnitt durch die in Fig. 3 dargestellten Justiermagneteinrichtungen 9 gemäß der Schnittebene IVB ist in Fig. 4B gezeigt. Im Vergleich zu Fig. 4A ist erkennbar, dass auch die Justiermagneteinrichtungen 9 um einen bestimmten relativen Winkel gegenüber der Position rotiert sind, die der Ruhelage anhand der Magnetpole 8 der Justiermagneteinrichtungen 9 entspricht. Es wirkt nun eine gewisse Korrekturkraft F1 zwischen den Justiermagneteinrichtungen 9 zusätzlich zur Koppelkraft F2, die zwischen den Rotormagneteinrichtungen 3 wirkt.

Im statisch betrachteten Fall der in Fig. 4A gezeigten Verspannung der Rotormagneteinrichtungen 3 gegeneinander wird durch die Korrekturkraft F1 ein relatives Drehmoment zwischen den Justiermagneteinrichtungen 9 erzeugt, welches dem resultierenden relativen Drehmoment entgegensteht, das durch die Koppelkraft F2 in Folge der Auslenkung der Rotormagneteinrichtungen 3 gegenüber ihrer Ruhelage hervorgerufen wird. Entsprechend der Darstellung von Fig. 3 sind die Rotormagneteinrichtungen 3 und die Justiermagneteinrichtungen 9 einer gemeinsamen Welle 2 über ebendiese miteinander rotatorisch gekoppelt. Im Idealfall gleichen sich somit das durch die Koppelkraft F2 bewirkte unerwünschte Drehmoment und das durch die Korrekturkraft F1 mittels der Justiermagneteinrichtungen 9 erzeugte Gegendrehmoment bezogen auf die Welle 2 weitgehend aus.

Das Maß, in welchem die in Fig. 4A dargestellte unerwünschte Verspannung der Rotormagneteinrichtungen 3 gegeneinander auftritt, kann in der Regel nicht mit ausreichender Genauigkeit vorhergesagt werden. Daher erlaubt die erfindungsgemäße Lösung eine Einstellung der Rotationswinkellage der Justiermagneteinrichtungen 9 zueinander, um die Korrekturkraft F1 bzw. das hierdurch bewirkte Gegendrehmoment im Einzelfall an die jeweilige Anwendungssituation anzupassen.

Im dynamisch betrachteten Fall, d. h. bei einer Rotationsbewegung der Wellen 2 während des Betriebs des Elektromotors 1, kann es zu der oben beschriebenen Ausbildung einer überlagerten Drehschwingung kommen. Steigt die Amplitude, d. h. der relative Rotationswinkel der Rotormagneteinrichtungen 3, im Zuge eines Aufschaukelns der Drehschwingung an, werden auch die Justiermagneteinrichtungen 9 aufgrund der Kopplung mit den jeweiligen Rotormagneteinrichtungen 3 stärker gegeneinander verdreht. Je nach Einstellung der grundsätzlichen relativen Ausrichtung der komplementären Justiermagneteinrichtungen 9 bewirkt die Korrekturkraft F1 im Fall hoher Amplituden ein entsprechend vergrößertes, der Schwingung entgegengerichtetes Drehmoment zwischen den Wellen 2, wodurch die störende Drehschwingung gedämpft wird und zum Erliegen kommt.

Bei dem zuvor beschriebenen Ablauf ist es von Vorteil, wenn die Korrekturkraft F1 betragsmäßig größer oder zumindest gleich der Koppelkraft F2 ist. Dies kann insbesondere in Bezug auf den Vergleich zweier Paare jeweils komplementärer Rotormagneteinrichtungen 3 und Justiermagneteinrichtungen 9 verstanden werden. Alternativ oder zusätzlich kann diese Bedingung auch für die Summe aller auftretenden Korrekturkräfte F1 und die Summe aller auftretenden Koppelkräfte F2 zusammengefasst gelten (falls eine Mehrzahl von Justiermagneteinrichtungen 9 und/oder Rotormagneteinrichtungen 3 vorgesehen ist).

Anhand des Vergleichs der Fig. 4A und 4B wird ersichtlich, dass die Rotormagneteinrichtungen 3 und die Justiermagneteinrichtungen 9 nicht dieselbe Anzahl von Magnetpolen 8 aufweisen müssen. Die jeweilige Anzahl richtet sich vielmehr danach, wie feingliedrig die Kopplung zwischen den Rotormagneteinrichtungen 3 bzw. die Einstellbarkeit der korrigierenden Wirkung der Justiermagneteinrichtungen 9 im konkreten Anwendungsfall sein soll.

Die Rotormagneteinrichtungen 3 und/oder die Justiermagneteinrichtungen 9 umfassen jeweils zumindest einen Magneten, von dem die Magnetpole 8 bereitgestellt werden. Der Magnet ist vorzugsweise gesintert und/oder kann an der Welle 2 oder einer gesonderten, jedoch der Übersichtlichkeit halber nicht im Einzelnen dargestellten Trageinrichtung der Rotormagneteinrichtung 3 bzw. Justiermagneteinrichtung 9 durch Kleben, Verpressen, Aufschrumpfen oder anderweitig stoff-, kraft- und/oder formschlüssig befestigt sein.

Besonders bevorzugt weist eine Rotormagneteinrichtung 3 und/oder eine Justiermagneteinrichtung 9 des erfindungsgemäßen Elektromotors 1 einen magnetischen Multipol auf. Aus Gründen der Vereinfachung wird vorliegend die Darstellung eines magnetischen Quadrupols (Fig. 1, 2, 4A) bzw. eines achtfachen Multipols (Fig. 4B) gewählt. Grundsätzlich kann es sich jedoch um einen n-fachen Multipol, d. h. einen Multipol höherer Ordnung, handeln, bei dem erfindungsgemäß keine grundsätzliche Obergrenze für die Anzahl der Magnetpole 8 besteht. Als besonders geeigneter Kompromiss zwischen dem erforderlichen konstruktiven Aufwand und einer guten funktionalen Wirkung hat sich ein achtfacher Multipol, weiter bevorzugt ein 12-facher Multipol und besonders bevorzugt ein 24-facher Multipol, herausgestellt. Die vorgenannten Werte entsprechen dabei insbesondere Untergrenzen für die bevorzugte Polanzahl des Multipols.

Bei den Magneten der Rotormagneteinrichtungen 3 und/oder der Justiermagneteinrichtungen 9 handelt es sich insbesondere um Permanentmagneten, die unabhängig von einer externen Energieversorgung ein Magnetfeld erzeugen und damit eine Kopplungs- bzw. Korrekturwirkung entfalten. In einer bevorzugten Ausführungsform sind jedoch die Magneten wenigstens einer Rotormagneteinrichtung 3 und/oder einer Justiermagneteinrichtung 9 als vorzugsweise eine oder mehrere Kontaktbürsten aufweisende Elektromagneten ausgebildet. Alternativ oder zusätzlich kann ein solcher Elektromagnet auch zum kontaktlosen Betrieb, insbesondere mittels Induktion, ausgebildet sein. Ferner können auch induzierte Wirbelströme einen Beitrag leisten, Gleichlaufschwankungen entgegenzuwirken. Somit lässt sich die Stärke der Korrekturkraft F1 und/oder der Koppelkraft F2 insbesondere stufenlos beeinflussen und/oder die hiermit verbundene Wirkung jeweils ein- und ausschalten. Es versteht sich, dass Permanentmagneten und Elektromagneten auch in Kombination an einer Rotormagneteinrichtung 3 bzw. Justiermagneteinrichtung 9 oder an verschiedenen Rotor-/Justiermagneteinrichtungen 3, 9 vorgesehen sein können.

Insbesondere für die Justiermagneteinrichtungen 9, aber auch für die Rotormagneteinrichtungen 3, ist hinsichtlich der Rotationsbewegung, die während des Betriebs des Elektromotors 1 von ihnen ausgeführt wird, eine zylindrische Form von Vorteil. Dementsprechend kann eine Justiermagneteinrichtung 9 und/oder eine Rotormagneteinrichtung 3 einen zylindrischen Grundkörper aufweisen. Die Rotationssymmetrieachse des Zylinders ist dabei insbesondere zur Längs- und Rotationsachse der Welle 2 parallel, bzw. fällt mit dieser zusammen, wie in Fig. 3 dargestellt.

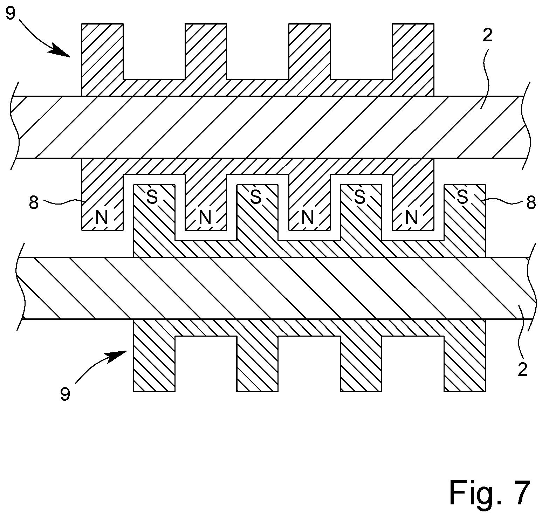

Eine im Mittel zylindrische Grundform des Grundkörpers der Justiermagneteinrichtungen 9 bzw. Rotormagneteinrichtungen 3 schließt nicht aus, dass ein oder mehrere radial von einer Zylindergrundform abragende Elemente, insbesondere in Form scheibenartiger Strukturen, vorgesehen sein können. Eine insgesamt rotationssymmetrische Ausgestaltung bezogen auf den Querschnitt senkrecht zur Rotationsachse ist in diesem Fall von Vorteil. Fig. 7 zeigt beispielhaft eine entsprechende Ausführungsform der Justiermagneteinrichtungen. Hierbei befinden sich insbesondere die Magnetpole 8 im radial außenliegenden Bereich der abragenden Elemente.

Durch die Ausbildung von scheibenartigen Strukturen mit dazwischenliegenden Freiräumen, vorliegend in Form von umlaufenden Ringnuten, ist eine räumliche Verschränkung der einander zugeordneten Magnetpole 8 möglich, ohne dass selbst bei starken Gleichlaufschwankungen die Gefahr einer mechanischen Kollision von Bauteilen besteht.

**In** der dargestellten bevorzugten Ausgestaltung befindet sich jeweils ein magnetischer Nordpol N einer Justiermagneteinrichtung 9 zwischen zwei magnetischen Südpolen S der komplementären Justiermagneteinrichtung 9, und umgekehrt. Die Justiermagneteinrichtungen 9 werden dadurch stärker miteinander gekoppelt als im Fall einer lediglich gegenüberliegenden Anordnung der Magnetpole 8, d.h. ohne die hier gezeigte Verschränkung. Somit kann eine größere Korrekturkraft im Fall von Gleichlaufschwankungen zwischen den Wellen 2 ausgeübt werden. Infolge der Rotation der Justiermagneteinrichtungen 9 geraten die magnetischen Nordpole N und Südpole S jeweils abwechselnd in die einander nächstliegende Position, so dass sich das in Fig. 7 dargestellte Verhältnis der Nordpole N und Südpole S jeweils periodisch umkehrt.

Es versteht sich, dass abweichend von der Darstellung gemäß Fig. 7 auch eine unregelmäßige bzw. asymmetrische Anordnung von abragenden Elementen und entsprechenden Freiräumen vorgesehen sein kann. Ferner können eine oder beide Justiermagneteinrichtungen 9 auch mehrere separate, axial voneinander beabstandete Scheiben, Ringe oder dergleichen aufweisen, die in der oben beschriebenen Weise miteinander zusammenwirken.

In umgekehrter Weise kann alternativ oder zusätzlich eine Justiermagneteinrichtung 9 und/oder eine Rotormagneteinrichtung 3 auch in die Welle 2 integriert sein, um eine möglichst kompakte Bauweise zu erreichen. Hierzu kann die Welle 2 im Bereich der jeweiligen Justiermagneteinrichtung 9 bzw. Rotormagneteinrichtung 3 einen entsprechend verringerten Durchmesser aufweisen, so dass im Ergebnis in dem betreffenden Bereich keine über den maximalen Radius der Welle 2 herausragenden Bauteile der Justiermagneteinrichtung 9 bzw. Rotormagneteinrichtung 3 vorhanden sind.

Es ist ferner keinesfalls erforderlich, dass die Justiermagneteinrichtungen 9 in der in Fig. 3 gezeigten Weise nah an den Rotormagneteinrichtungen 3 angeordnet sind. Eine entsprechende Beabstandung entlang der Achse der Welle 2 ist erfindungsgemäß ebenso möglich. Bei einer besonders bevorzugten Ausgestaltung kann sogar wenigstens eine der Justiermagneteinrichtungen 9 in axialer Richtung, d. h. entlang der Welle 2, verschiebbar ausgebildet sein.

Die Schnittdarstellungen der Fig. 1, 2, 4A und 4B mögen suggerieren, dass die Rotormagneteinrichtungen 3 bzw. Justiermagneteinrichtungen 9 entlang ihres Umfangs zwar eine Vielzahl von Magneten bzw. Magnetpolen 8 aufweisen können, in axialer Richtung jedoch einen konstanten Aufbau aufweisen. Erfindungsgemäß ist jedoch auch eine Bauweise möglich, bei der mehrere, insbesondere unterschiedlich ausgestaltete Magneten bei einer Justiermagneteinrichtung 9 vorgesehen sind. Hierbei kann es sich insbesondere um eine Abfolge von vorzugsweise ringförmig um die Welle 2 angeordneten Magneten handeln, wobei die Anzahl der Magnetpole 8 jedes Rings unterschiedlich sein kann.

Es ist darüber hinaus ebenso möglich, dass nicht nur in axialer Richtung unmittelbar benachbarte Magneten vorgesehen sind, sondern es kann auch eine Beabstandung zwischen axial versetzten Magneten bzw. insbesondere ringförmigen Magnetgruppen eingerichtet sein. Hierdurch kann auf bauliche Gegebenheiten abhängig vom einzelnen Anwendungsfall Rücksicht genommen werden.

Axial versetzt angeordnete Magneten können ferner auch um unterschiedliche Rotationswinkel versetzt sein. Hierbei ist insbesondere eine schräge Verzahnung der Magnete bzw. Magnetpole 8, vorzugsweise in Form einer schraubenförmigen Anordnung der Magnetpole 8 um die Welle 2, möglich, wodurch eine nahezu kontinuierliche Wirkung der Korrekturkraft F1 bei größerer Laufruhe auftritt.

Ferner kann durch mehrere axial versetzt angeordnete und unabhängig voneinander einstellbare Magneten bzw. Magnetgruppen einer Justiermagneteinrichtung 9 ebenso wie durch eine Mehrzahl von Justiermagneteinrichtungen 9 auf einer Welle 2 auch auf störende Phänomene abseits einer reinen Drehschwingung reagiert werden. Hierzu zählen beispielsweise eine überlagerte Biegeschwingung oder eine Torsionsschwingung der Welle 2.

Die aus Gründen der Vereinfachung nicht im Einzelnen dargestellte Trageinrichtung für Magneten der Justiermagneteinrichtung 9 bzw. der Rotormagneteinrichtung 3 und/oder für die Justiermagneteinrichtung 9 bzw. die Rotormagneteinrichtung 3 selbst ist insbesondere als Hülse ausgebildet. Vorzugsweise kommt hierbei eine Aluminiumhülse zum Einsatz. Besonders bevorzugt ist eine Ausgestaltung, bei der eine Trageinrichtung vorgesehen ist, die wenigstens eine der Justiermagneteinrichtungen 9 als Ganze trägt, so dass diese zunächst vollständig gefertigt werden kann und anschließend mittels der Trageinrichtung auf die Welle 2 aufgebracht wird. Insbesondere lässt bzw. lassen sich ein Magnet oder mehrere Magneten, vorzugsweise in Form von Stabmagneten, in die Hülse einschieben.

Eine insbesondere hülsenartige Trageinrichtung kann zusätzlich als Kühlkörper zur Kühlung der Magneten dienen. Bei einem zu starken Temperaturanstieg während des Betriebs besteht im Fall von Permanentmagneten ansonsten beispielsweise die Gefahr einer thermischen Entmagnetisierung.

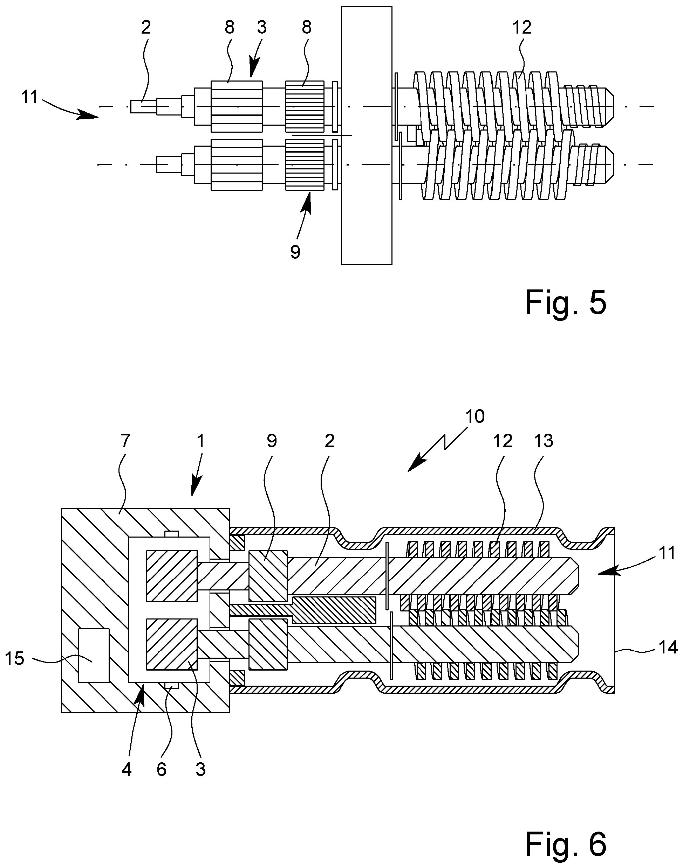

Der erfindungsgemäße Elektromotor 1 eignet sich insbesondere zum Antrieb einer Vakuumpumpe 10, wie sie in Fig. 6 beispielhaft dargestellt ist. Bei einer solchen Vakuumpumpe 10 dient der Elektromotor 1, insbesondere als Zwei-Wellen-Synchronmotor, zum Antrieb zweier Rotoren 11, die in Fig. 5 in schematischer Draufsicht wiedergegeben sind. Ein Rotor 11 der Vakuumpumpe 10 umfasst neben der Welle 2, wenigstens einer Rotormagneteinrichtung 3 und einer Justiermagneteinrichtung 9 insbesondere auch ein oder mehrere Verdrängerelemente 12. Im vorliegend dargestellten Beispiel ist das Verdrängerelement 12 als Schraube für eine Schraubenpumpe ausgebildet. Hierbei ist beispielshaft eine nicht verdichtende Ausführungsform gezeigt, bei der die Schraube eine konstante Steigung aufweist. Es versteht sich, dass gleichwohl auch eine Ausführung mit variabler Steigung, insbesondere zur Verdichtung, vorgesehen sein kann. Möglich sind darüber hinaus auch beispielsweise Verdrängerelemente 12 in Form von Dreh- oder Wälzkolben oder Verdrängerelemente 12, die auf einem vergleichbaren Prinzip beruhen.

Entsprechend der schematischen beispielhaften Darstellung von Fig. 6 ist bei der erfindungsgemäßen Vakuumpumpe 10 insbesondere vorgesehen, mittels des erfindungsgemäßen Elektromotors 1 die zwei Rotoren 11 anzutreiben. Hierbei kommt die zuvor beschriebene Funktion der Justiermagneteinrichtungen 9 zum Einsatz. Im Fall der hier gezeigten Vakuumpumpe 10 verlaufen die parallelen Rotoren 11 zum einen im Bereich des antriebswirksamen Teils des Elektromotors 1, d. h. insbesondere im Stator 4, und/oder einem Gehäuse 7 des Elektromotors 1.

Ferner sind die Wellen 2 der Rotoren 11 derart verlängert, dass sie durch ein Pumpengehäuse 13 verlaufen und dort drehbar gelagert sind. Im vorderen Teil des Pumpengehäuses 13 sind die Verdrängerelemente 12 angeordnet. Sie wirken dort derart zusammen, dass ein Fördermedium, beispielsweise ein aus einem umschlossenen Raum zu evakuierendes Fluid, vorzugsweise ein Gas, über einen Ansaugstutzen 14 in das Pumpengehäuse 13 eingesogen und von den Verdrängerelementen 12 weitertransportiert wird. In Förderrichtung jenseits der Verdrängerelemente 12 verlässt das transportierte Fördermedium dann das Pumpengehäuse 13 durch einen Auslassstutzen. Im hier dargestellten Beispiel ist dieser in senkrechter Richtung zur Bildebene angeordnet und von daher in der vorliegenden Schnittdarstellung nicht gezeigt.

Die Verdrängerelemente 12 berühren während des Betriebs vorzugsweise weder sich gegenseitig noch das Pumpengehäuse 13. Dennoch muss für eine ausreichende Abdichtung zwischen den Verdrängerelementen 12 bzw. gegenüber dem Pumpengehäuse 13 Sorge getragen werden. Hierbei kommen daher äußerst geringe Spaltabstände zwischen den beteiligten Bauteilen zum Einsatz. Die zuvor beschriebenen Probleme beim Auftreten von Gleichlaufschwankungen, Synchronisierungsfehlern zwischen den Rotoren 11 und insbesondere sich aufschaukelnden überlagerten Drehschwingungen der Rotoren 11 können sich somit schnell in einer für den Betrieb der Vakuumpumpe 10 kritischen Weise auswirken.

Bei einer besonders bevorzugten Ausführungsform kann wenigstens eines der Verdrängerelemente 12 eine zusätzliche Rotormagneteinrichtung 3 aufweisen. Hierdurch kann die Kopplung zwischen beiden Rotoren 11 verstärkt werden, wenn jeweils komplementär zusammenwirkende Verdrängerelemente 12 zusätzlich durch entsprechende Rotormagneteinrichtungen 3 ein weiteres magnetisches Getriebe bilden.

Alternativ oder zusätzlich kann eine bevorzugte Ausgestaltung vorsehen, dass eine oder mehrere Justiermagneteinrichtungen 9 in die Verdrängerelemente 12 integriert sind. Hierbei kann es sich jeweils um eine der primären Justiermagneteinrichtungen 9 oder um eine zusätzliche Justiermagneteinrichtung 9 handeln. Die korrigierende Wirkung durch die Justiermagneteinrichtung 9 kann hierdurch unmittelbar dort wirken, wo sich im Fall einer Störung der vorgenannten Weise zuerst negative Konsequenzen bemerkbar machen würden.

Der Elektromotor 1 bzw. die Vakuumpumpe 10 kann bzw. können ferner eine insbesondere elektronische Steuerung 15 aufweisen, mittels derer beispielsweise die Drehzahl der Rotoren 11, die Stärke und/oder Phase des Statorfeldes, die Fördermenge der Vakuumpumpe 10, der Geräuschpegel in der Umgebung der Vakuumpumpe 10, die Leistungsaufnahme des Elektromotors 1 und/oder ein Temperaturwert erfasst bzw. überwacht werden kann. Darüber hinaus ist auch eine Regelung der vorgenannten und/oder weiteren Parameter mittels der Steuerung 15 möglich.

Zur Erfassung der Drehzahl und/oder der Rotationsposition eines oder beider Rotoren 11 kann eine entsprechende Einrichtung vorgesehen sein. Hierzu weist die Vakuumpumpe 10 vorzugsweise eine entsprechende Sensorschaltung auf, die insbesondere in die Steuerung 15 integriert ist. Mittels der Sensorschaltung kann ein Gebermagnet ausgelesen werden, welcher der Sensorschaltung bzw. der Steuerung 15 einen vollständigen oder teilweisen Umlauf des Rotors anzeigt. Ein entsprechender Gebermagnet ist vorzugsweise in wenigstens eine der Justiermagneteinrichtungen 9 integriert, so dass kein zusätzliches Bauteil für die Überwachung der Rotationsbewegung dem Rotor 11 hinzugefügt werden muss. Besonders bevorzugt wird ein Magnet bzw. ein Magnetpol 8 der Justiermagneteinrichtung 9 von der komplementären Sensorschaltung als Gebermagnet wahrgenommen.

### Bezugszeichenliste:

- 1: Elektromotor
- 2: Welle
- 3: Rotormagneteinrichtung
- 4: Stator
- 5: Statorinnenraum
- 6: Felderzeuger
- 7: Gehäuse
- 8: Magnetpol
- 9: Justiermagneteinrichtung
- 10: Vakuumpumpe
- 11: Rotor
- 12: Verdrängerelement
- 13: Pumpengehäuse
- 14: Ansaugstutzen
- 15: Steuerung

- N: magnetischer Nordpol
- S: magnetischer Südpol

## Patentansprüche

1. Elektromotor (1), insbesondere Zwei-Wellen-Synchronmotor, vorzugsweise zum Betrieb einer Vakuumpumpe (10), mit zwei jeweils auf parallel verlaufenden Wellen (2) angeordneten Rotormagneteinrichtungen (3), wobei die Rotormagneteinrichtungen (3) im Betriebszustand des Elektromotors (1) derart in einem gemeinsamen Stator (4) angeordnet sind, dass sie zur gegenseitigen Kopplung bezüglich ihrer Rotationswinkellage miteinander wechselwirken, wobei zusätzlich zu den Rotormagneteinrichtungen (3) auf jeder der zwei Wellen (2) jeweils wenigstens eine Justiermagneteinrichtung (9) angeordnet ist, **dadurch gekennzeichnet, dass** wenigstens eine der Justiermagneteinrichtungen (9) mittels Rotation relativ zur zugehörigen Welle (2) verstellbar ist und/oder in der Rotationswinkellage relativ zu einer komplementären Justiermagneteinrichtung (9) der jeweils anderen Welle (2) veränderbar ist.

2. Elektromotor nach Anspruch 1, **dadurch gekennzeichnet, dass** wenigstens eine der Justiermagneteinrichtungen (9) jeder Welle (2) außerhalb des Stators (4) angeordnet ist.

3. Elektromotor nach Anspruch 1 oder 2, **dadurch gekennzeichnet, dass** zwischen den komplementären Justiermagneteinrichtungen (9) eine Korrekturkraft (F1) besteht, die betragsmäßig größer oder gleich einer zwischen zwei komplementären Rotormagneteinrichtungen (3) wirkenden Koppelkraft (F2) ist.

4. Elektromotor nach einem der voranstehenden Ansprüche, **dadurch gekennzeichnet, dass** wenigstens eine der Rotormagneteinrichtungen (3) und/oder wenigstens eine der Justiermagneteinrichtungen (9) einen oder mehrere insbesondere gesinterte/n und/oder geklebte/n und/oder verpresste/n Magnete/n aufweist.

5. Elektromotor nach einem der voranstehenden Ansprüche, **dadurch gekennzeichnet, dass** wenigstens eine der Rotormagneteinrichtungen (3) und/oder wenigstens eine der Justiermagneteinrichtungen (9) einen magnetischen Multipol, vorzugsweise einen wenigstens achtfachen Multipol, bevorzugt einen wenigstens 12-fachen Multipol, besonders bevorzugt einen wenigstens 24-fachen Multipol, aufweist.

6. Elektromotor nach einem der voranstehenden Ansprüche, **dadurch gekennzeichnet, dass** wenigstens eine der Justiermagneteinrichtungen (9) einen Elektromagneten aufweist.

7. Elektromotor nach einem der voranstehenden Ansprüche, **dadurch gekennzeichnet, dass** wenigstens eine der Justiermagneteinrichtungen (9) einen zylinderförmigen Grundkörper hat und/oder dass wenigstens eine der Justiermagneteinrichtungen (9) ein oder mehrere radial abragende/s Element/e aufweist.

8. Elektromotor nach einem der voranstehenden Ansprüche, **dadurch gekennzeichnet, dass** wenigstens eine der Justiermagneteinrichtungen (9) in die Welle (2) integriert ist.

9. Elektromotor nach einem der voranstehenden Ansprüche, **dadurch gekennzeichnet, dass** wenigstens eine der Justiermagneteinrichtungen (9) axial entlang der Welle (2) verschiebbar ist.

10. Elektromotor nach einem der voranstehenden Ansprüche, **dadurch gekennzeichnet, dass** wenigstens eine der Justiermagneteinrichtungen (9) eine Mehrzahl von axial versetzt angeordneten Magneten umfasst.

11. Elektromotor nach Anspruch 10, **dadurch gekennzeichnet, dass** die Magneten der Justiermagneteinrichtung (9) relativ zueinander um die Wellenachse rotiert sind, insbesondere derart, dass sich eine schraubenförmige Anordnung gleicher Magnetpole (8) um die Wellenachse ergibt.

12. Elektromotor nach einem der voranstehenden Ansprüche, **dadurch gekennzeichnet, dass** eine Trageinrichtung, insbesondere eine Hülse, vorzugsweise eine Aluminiumhülse, zum Tragen wenigstens einer der Justiermagneteinrichtungen (9) auf der Welle (2) angeordnet ist.

13. Vakuumpumpe, insbesondere Drehkolbenpumpe oder Schraubenpumpe, vorzugsweise mit einem Saugvermögen unter 50 m³/h, mit wenigstens einem Elektromotor (1) zur Rotation von wenigstens zwei Verdrängerelementen (12),
**dadurch gekennzeichnet,**
**dass** der Elektromotor (1) nach einem der voranstehenden Ansprüche ausgebildet ist.

14. Vakuumpumpe nach Anspruch 13, **dadurch gekennzeichnet, dass** wenigstens eines der Verdrängerelemente (12) eine zusätzliche Rotormagneteinrichtung (3) und/oder eine der Justiermagneteinrichtungen (9) oder eine zusätzliche Justiermagneteinrichtung (9) aufweist.

15. Vakuumpumpe nach Anspruch 13 oder 14, **dadurch gekennzeichnet, dass** wenigstens eine der Justiermagneteinrichtungen (9) einen Magneten umfasst, der als Gebermagnet zur Wechselwirkung mit einer komplementären Sensorschaltung ausgebildet ist.

## Claims

1. Electric motor (1), in particular a two-shaft synchronous motor, preferably for operating a vacuum pump (10), with two rotor magnet devices (3) each arranged on parallel shafts (2), wherein, in the operating state of the electric motor (1), the rotor magnet devices (3) are arranged in a common stator (4) in such a way that they interact with each other for mutual coupling with regard to their rotational angular position,
wherein, in addition to the rotor magnet devices (3), at least one adjusting magnet device (9) is arranged on each of the two shafts (2),
**characterized in that**
at least one of the adjusting magnet devices (9) can be adjusted by means of rotation relative to the associated shaft (2) and/or can be changed in the rotational angular position relative to a complementary adjusting magnet device (9) of the respective other shaft (2).

2. Electric motor according to claim 1, **characterized in that** at least one of the adjusting magnet devices (9) of each shaft (2) is arranged outside the stator (4).

3. Electric motor according to claim 1 or 2, **characterized in that** there is a correction force (F1) between the complementary adjusting magnet devices (9) which is greater than or equal in amount to a coupling force (F2) acting between two complementary rotor magnet devices (3).

4. Electric motor according to one of the preceding claims, **characterized in that** at least one of the rotor magnet devices (3) and/or at least one of the adjusting magnet devices (9) has one or more magnets, in particular sintered and/or bonded and/or pressed magnets.

5. Electric motor according to one of the preceding claims, **characterized in that** at least one of the rotor magnet devices (3) and/or at least one of the adjusting magnet devices (9) has a magnetic multipole, preferably an at least eightfold multipole, more preferably an at least 12-fold multipole, particularly preferably an at least 24-fold multipole.

6. Electric motor according to one of the preceding claims, **characterized in that** at least one of the adjusting magnet devices (9) comprises an electromagnet.

7. Electric motor according to one of the preceding claims, **characterized in that** at least one of the adjusting magnet devices (9) has a cylindrical base body and/or that at least one of the adjusting magnet devices (9) has one or more radially protruding elements.

8. Electric motor according to one of the preceding claims, **characterized in that** at least one of the adjusting magnet devices (9) is integrated into the shaft (2).

9. Electric motor according to one of the preceding claims, **characterized in that** at least one of the adjusting magnet devices (9) is axially displaceable along the shaft (2).

10. Electric motor according to one of the preceding claims, **characterized in that** at least one of the adjusting magnet devices (9) comprises a plurality of magnets arranged in an axially offset manner.

11. Electric motor according to claim 10, **characterized in that** the magnets of the adjusting magnet device (9) are rotated relative to each other about the shaft axis, in particular in such a way that a helical arrangement of identical magnetic poles (8) around the shaft axis results.

12. Electric motor according to one of the preceding claims, **characterized in that** a support device, in particular a sleeve, preferably an aluminum sleeve, for supporting at least one of the adjusting magnet devices (9) is arranged on the shaft (2).

13. Vacuum pump, in particular a rotary vane pump or screw pump, preferably with a pumping speed below 50 m³/h, with at least one electric motor (1) for rotating at least two displacement elements (12),
**characterized in that**
the electric motor (1) is designed according to one of the preceding claims.

14. Vacuum pump according to claim 13, **characterized in that** at least one of the displacement elements (12) has an additional rotor magnet device (3) and/or one of the adjusting magnet devices (9) or an additional adjusting magnet device (9).

15. Vacuum pump according to claim 13 or 14, **characterized in that** at least one of the adjusting magnet devices (9) comprises a magnet which is designed as a transmitter magnet for interaction with a complementary sensor circuit.

## Revendications

1. Moteur électrique (1), en particulier moteur synchrone à deux arbres, de préférence pour faire fonctionner une pompe à vide (10), avec deux dispositifs magnétiques de rotor (3) disposés respectivement sur des arbres parallèles (2), les dispositifs magnétiques de rotor (3) étant disposés dans un stator commun (4) lorsque le moteur électrique (1) est en marche, de telle sorte qu'ils interagissent entre eux pour se coupler mutuellement en fonction de leur position angulaire de rotation,
en outre, en plus des dispositifs magnétiques de rotor (3), au moins un dispositif magnétique d'ajustage (9) est disposé sur chacun des deux arbres (2),
**caractérisé en ce que**
qu'au moins l'un des dispositifs magnétiques d'ajustage (9) est réglable par rotation par rapport à l'arbre correspondant (2) et/ou peut être modifié dans la position angulaire de rotation par rapport à un dispositif magnétique d'ajustage complémentaire (9) de l'autre arbre (2).

2. Moteur électrique selon la revendication 1, **caractérisé en ce qu'**au moins l'un des dispositifs magnétiques d'ajustage (9) de chaque arbre (2) est disposé à l'extérieur du stator (4).

3. Moteur électrique selon la revendication 1 ou 2, **caractérisé en ce qu'**il existe entre les dispositifs magnétiques d'ajustage complémentaires (9) une force de correction (F1) qui est supérieure ou égale en valeur absolue à une force de couplage (F2) agissant entre deux dispositifs magnétiques de rotor complémentaires (3).

4. Moteur électrique selon l'une des revendications précédentes, **caractérisé en ce qu'**au moins l'un des dispositifs magnétiques du rotor (3) et/ou au moins l'un des dispositifs magnétiques d'ajustage (9) comporte un ou plusieurs aimants, en particulier frittés et/ou collés et/ou pressés.

5. Moteur électrique selon l'une des revendications précédentes, **caractérisé en ce qu'**au moins l'un des dispositifs magnétiques de rotor (3) et/ou au moins l'un des dispositifs magnétiques d'ajustage (9) comporte un multipôle magnétique, de préférence un multipôle au moins octuple, de préférence encore un multipôle au moins duodécuple, de préférence particulière un multipôle à au moins vingt-quatre pôles.

6. Moteur électrique selon l'une des revendications précédentes, **caractérisé en ce qu'**au moins l'un des dispositifs magnétiques d'ajustage (9) comporte un électroaimant.

7. Moteur électrique selon l'une des revendications précédentes, **caractérisé en ce qu'**au moins l'un des dispositifs magnétiques d'ajustage (9) présente un corps de base cylindrique et/ou **en ce qu'**au moins l'un des dispositifs magnétiques d'ajustage (9) comporte un ou plusieurs éléments saillant(s) radialement.

8. Moteur électrique selon l'une des revendications précédentes, **caractérisé en ce qu'**au moins l'un des dispositifs magnétiques d'ajustage (9) est intégré dans l'arbre (2).

9. Moteur électrique selon l'une des revendications précédentes, **caractérisé en ce qu'**au moins l'un des dispositifs magnétiques d'ajustage (9) est déplaçable axialement le long de l'arbre (2).

10. Moteur électrique selon l'une des revendications précédentes, **caractérisé en ce qu'**au moins l'un des dispositifs magnétiques d'ajustage (9) comprend une pluralité d'aimants disposés de manière décalée axialement.

11. Moteur électrique selon la revendication 10, **caractérisé en ce que** les aimants du dispositif magnétique d'ajustage (9) sont tournés les uns par rapport aux autres autour de l'axe de l'arbre, en particulier de telle sorte qu'il en résulte une disposition hélicoïdale de pôles magnétiques identiques (8) autour de l'axe de l'arbre.

12. Moteur électrique selon l'une des revendications précédentes, **caractérisé en ce qu'**un dispositif de support, en particulier un manchon, de préférence un manchon en aluminium, est disposé sur l'arbre (2) pour supporter au moins l'un des dispositifs magnétiques d'ajustage (9).

13. Pompe à vide, en particulier pompe à piston rotatif ou pompe à vis, de préférence avec une capacité d'aspiration inférieure à 50 m³ /h, avec au moins un moteur électrique (1) pour la rotation d'au moins deux éléments de refoulement (12),
**caractérisée en ce que**
le moteur électrique (1) est conçu selon l'une des revendications précédentes.

14. Pompe à vide selon la revendication 13, **caractérisée en ce qu'**au moins l'un des éléments de refoulement (12) comporte un dispositif magnétique de rotor supplémentaire (3) et/ou l'un des dispositifs magnétiques d'ajustage (9) ou un dispositif magnétique d'ajustage supplémentaire (9).

15. Pompe à vide selon la revendication 13 ou 14, **caractérisée en ce qu'**au moins l'un des dispositifs magnétiques d'ajustage (9) comprend un aimant qui est conçu comme un aimant capteur pour interagir avec un circuit de détection complémentaire.
